# EUROPÄISCHE PATENTSCHRIFT

(11) **EP 1 248 744 B1**
(45) Veröffentlichungstag und Bekanntmachung des Hinweises auf die Patenterteilung: **01.10.2008**
(21) Anmeldenummer: 01909489.5
(22) Anmeldetag: 17.01.2001
(51) Int. Cl.: C01B 3/00

(54) **KATALYSE DER WASSERSTOFFSORPTIONSKINETIK VON HYDRIDEN DURCH NITRIDE UND CARBIDE**
CATALYSIS OF THE HYDROGEN SORPTION KINETICS OF HYDRIDES BY USING NITRIDES AND CARBIDES
CATALYSE DE LA CINETIQUE DE SORPTION D'HYDROGENE D'HYDRURES PAR NITRURES ET CARBURES

(30) Priorität: 20.01.2000 DE 10002117
(43) Veröffentlichungstag der Anmeldung: 16.10.2002
(73) Patentinhaber: GKSS-Forschungszentrum Geesthacht GmbH, 21502 Geesthacht (DE); GfE Metalle und Materialien GmbH, 90431 Nürnberg (DE)
(72) Erfinder: OELERICH, Wolfgang, 65191 Wiesbaden (DE); KLASSEN, Thomas, 21465 Wentorf (DE); BORMANN, Rüdiger Prof. Dr. rer. nat., 21224 Rosengarten (DE); GÜTHER, Volker, 90559 Burgthann (DE)
(74) Vertreter: UEXKÜLL & STOLBERG
(86) Internationale Anmeldenummer: PCT/DE2001/000187
(87) Internationale Veröffentlichungsnummer: WO 2001/053195

(56) Entgegenhaltungen:
- DE-A- 2 945 981
- US-A- 5 389 333
- US-A- 5 837 030
- PATENT ABSTRACTS OF JAPAN vol. 018, no. 016 (M-1540), 12. Januar 1994 (1994-01-12) & JP 05 255712 A (SUMITOMO METAL IND LTD), 5. Oktober 1993 (1993-10-05)

## Beschreibung

Die Erfindung betrifft einen Zusatz zur Katalyse der Hydrierung und der Dehydrierung von Metallen, Metallegierungen, intermetallischen Phasen oder Verbundwerkstoffen aus diesen, nachfolgend Speichermaterial genannt, und zur Aktivierung derselben.

Der ideale Energieträger für den Transport und die umweltfreundliche Umwandlung von Energie ist Wasserstoff. Er ist mit Hilfe elektrischer Energie aus Wasser herzustellen. Da bei seiner Rückumwandlung in Energie, z.B mit Hilfe von Brennstoffzellen, wiederum ausschließlich Wasserdampf entsteht, ergibt sich insgesamt ein geschlossener Energiekreislauf ohne Umweltbelastungen. Durch diesen idealen Energieträger wird es möglich, elektrische Energie in bestimmten Teilen der Welt zu produzieren und in andere Länder zu transportieren.

In diesem Zusammenhang stellt sich das Problem einer effektiven und sicheren Speicherung des Wasserstoffs. Grundsätzlich bieten sich drei mögliche Alternativen:
1. die gasförmige Speicherung in Druckbehältern;
2. die Verflüssigung von Wasserstoff und Speicherung in gekühlten Spezialbehältern;
3. die Speicherung in fester Form als Metallhydrid.

Die gasförmige Speicherung in Druckbehältern ist vergleichsweise einfach, erfordert allerdings einen relativ hohen Energieaufwand für die Verdichtung und hat den Nachteil eines hohen Raumbedarfs. Flüssiger Wasserstoff beansprucht ein deutlich geringeres Volumen, allerdings geht rund ein Drittel des Energiegehalts für die Verflüssigung verloren, für die eine Kühlung auf -253°C erforderlich ist. Weiterhin sind die Handhabung von flüssigem Wasserstoff, die entsprechende Kältetechnik sowie das Tankdesign aufwendig und kostspielig. Da Brennstoffzellen bei einer Temperatur von etwa 150°C betrieben werden, ist eine zusätzliche Erwärmung des Wasserstoffs nach der Entnahme aus dem Speichertank notwendig.

Neben stationären Anwendungen in größeren Industriebetrieben ist insbesondere an den Einsatz von Wasserstoff in der Verkehrstechnik gedacht, z.B. für das emissionsfreie Automobil. Hierfür sind sowohl gasförmige als auch flüssige Speicherung sicherheitstechnisch bedenklich, weil der Tank bei einem Unfall aufreißen und Wasserstoff unkontrolliert freigesetzt werden könnte.

Demgegenüber bietet eine Speicherung in fester Form als Metallhydrid ein großes Sicherheitspotential. Es ist bekannt, daß verschiedene Metalle und Metallegierungen Wasserstoff reversibel binden können. Dabei wird der Wasserstoff chemisch gebunden und ein entsprechendes Metallhydrid gebildet. Durch Energiezufuhr, d.h. durch die Erwärmung des Metalls bzw. der Legierung wird der Wasserstoff wieder freigegeben, so daß die Reaktion vollständig reversibel ist. Bei einem Unfall würde die Wärmezufuhr unterbrochen und somit sofort auch die Wasserstoffabgabe unterbunden. Darüber hinaus läßt sich auf diese Weise etwa 60 % mehr Wasserstoff pro Volumen speichern als im Flüssiggastank. Ein wesentlicher Nachteil dieser Speichermethode war bisher die träge Reaktionsgeschwindigkeit, die Ladezeiten von mehreren Stunden zur Folge hatte.

Inwischen ist es durch die Herstellung von Metallegierungen mit nanokristalliner Mikrostruktur gelungen, die Reaktionskinetik gegenüber herkömmlichem grobkristallinen Material wesentlich zu beschleunigen. In der deutschen Patentanmeldung Nr. 197 58 384.6 ist ein entsprechendes Verfahren beschrieben, das unter verhältnismäßig einfach beherrschbaren Randbedingungen und mit verhältnismäßig geringer Energiezufuhr betreibbar ist. Zudem entfallen dabei die sonst üblichen Prozeßschritte der Aktivierung des Speichermaterials.

Um die Reaktionsgeschwindigkeit des bislang auf dies.e oder andere Weise hergestellte Speichermaterials weiter zu erhöhen, wurden verschiedene Metalle zugegeben, wie z.B. Nickel, Platin oder Palladium.

Für einen technischen Einsatz der Hydridspeicher in größerem Umfang ist jedoch die Reaktionskinetik noch immer zu träge und weiterhin sind die genannten metallischen Katalysatoren zu teuer und damit ihre Nutzung unwirtschaftlich.

Eine alternative Lösung ist die Verwendung von oxidischen Katalysatoren. Allerdings reagieren diese z.T. mit dem Speichermaterial und führen so zu einer Absenkung der Gesamtkapazität.

Es ist somit Aufgabe der vorliegenden Erfindung, geeignete kostengünstige und langzeitstabile Katalysatorzusätze zu benennen, die die keaktionsgeschwindigkeit beim Hydrieren und Dehydrieren von nanokristallinen wasserstoff-Speichermaterialien beschleunigen, sowie weiterhin ein Verfahren zu schaffen, das die Herstellung von entsprechend mit Katalysatoren versehenen Hydridspeichermaterialien erlaubt, so daß derart hergestellte Materialien in großtechnischem Maßstab als wasserstoffspeicher eingesetzt werden können, bei denen die technisch erforderliche hohe Reaktionsgeschwindigkeit bei der Wasserstoffaufnahme und -abgabe gewährleistet ist.

Gelöst wird diese Aufgabe bezüglich des nanokristallinen Speichermaterials dadurch, daß es ein Nitrid oder Carbid von Metallen, ausgewählt aus der Gruppe bestehend aus: Sc, Ti, V, Cr, Mn, Fe, Co, Ni, Cu, Zn, Y, Zr, Nb, Mo, Sn, La, Hf, Ta, W oder seltene Erden mit nanokristalliner Struktur enthält. Gelöst wird diese Aufgabe auch durch die Verwendung von Nitriden oder Carbiden der genannten Elemente als Katalysator zur Hydrierung und Dehydrierung von WasserstoffSpeichermaterialien.

Dabei wurde sich erfindungsgemäß zunutze gemacht, daß im Vergleich zu reinen Metallen Metallnitride oder Metallcarbide spröde sind, wodurch eine kleinere Partikelgröße und eine homogenere Verteilung im erfindungsgemäßen werkstoff erreicht wird, was zur Folge hat, daß die Reaktionskinetik gegenüber der Verwendung von metallischen Katalysatoren wesentlich erhöht wird.

Ein weiterer Vorteil ist, daß Metallnitride oder Metallcarbide regelmäßig sehr viel preisgünstiger bereitstellbar sind als Metalle bzw. Metallegierungen, so daß auch das erfindungsgemäß angestrebte Ziel einer preisgünstigen großtechnischen Bereitstellbarkeit derartiger erfindungsgemäßer Speichermaterialien erreicht wird.

Gemäß einer vorteilhaften Ausgestaltung der Erfindung kann das Metallnitrid bzw. das Metallcarbid aus Gemischen der Metallnitride bzw. Metallcarbide sowie auch aus Mischnitriden bzw. Mischcarbiden sowie Oxynitriden bzw. Oxycarbiden der Metalle, insbesondere der voraufgeführten Metalle, bestehen.

Dabei können jeweils auch verschiedene Metallnitride bzw. Metallcarbide der gleichen Metalle eingesetzt werden, z.B.: TiN, Ti₅N₃, Fe₂N, Fe₄N, Fe₃N₄, Cr₂N, CrN, Cr₃C₂, Cr₇C₃, Mn₄N, Mn₂N, Mn₃N₂, VN, V₂N, VC, V₂C, V₅C₅, V₈C₇, usw.

Das Speichermaterial kann aus verschiedenen Metallen, Metallegierungen, intermetallischen Phasen oder Verbundwerkstoffen oder Mischungen aus diesen bestehen, sowie ebenfalls aus den entsprechenden Hydriden desselben Speichermaterials..

Das Speichermaterialweist eine nanokristalline Struktur auf, wobei gleichermaßen auch der Katalysator eine nanokristalline Struktur aufweisen kann. Weisen das Speichermaterial 1 und der Katalysator eine nanokristalline Mikrostruktur auf, so wird dadurch die Reaktionsgeschwindigkeit der Hydrierung bzw. Dehydrierung des Speichermaterials erhöht.

Das erfindungsgemäße Verfahren zur Herstellung eines Speichermaterials ist dadurch gekennzeichnet, daß das Material und/oder der Katalysator einem mechanischen Mahlvorgang unterworfen wird bzw. werden mit dem Ziel, ein Verbuddpulver aus beiden Komponenten zu erhalten, so daß eine optimierte Reaktionsoberfläche und eine günstige Defektstruktur im Volumen des Speichermaterials sowie eine gleichmäßige Verteilung des Katalysators erreicht werden.

Der Mahlvorgang selbst kann in Abhängigkeit von Speichermaterial und/oder Katalysator verschieden lang gewählt werden, um die angestrebte optimale Oberfläche des Speichermaterials sowie die angestrebte optimale Verteilung des Katalysators zu erreichen.

Dabei kann es vorteilhaft sein, daß das Speichermaterial selbst zunächst dem Mahlvorgang unterworfen wird und nachfolgend nach vorbestimmter Zeit ebenfalls der Katalysator zugegeben und der Mahlvorgang fortgesetzt wird. Es kann aber auch vorteilhafterweise umgekehrt verfahren werden, d.h. daß zunächst der Katalysator dem Mahlvorgang unterworfen wird und nachfolgend ebenfalls das Speichermaterial. Außerdem können zunächst Speichermaterial und Katalysator jeweils vorbestimme Zeiten gemahlen werden und anschließend gemischt und/oder gemeinsam gemahlen werden.

Diese jeweils unterschiedlichen möglichen Vorgehensweisen beim Mahlvorgang können in Abhängigkeit von Speichermaterial und in Abhängigkeit des zuzusetzenden Katalysators gewählt werden, ebenfalls die jeweiligen Mahldauern, die jeweils wenige Minuten bis zu 200 Stunden betragen können.

Um zu verhindern, daß Reaktionen mit dem Umgebungsgas während des Mahlvorgangs des Speichermaterials vonstatten gehen, wird das Verfahren vorzugsweise derart ausgeführt, daß der Mahlvorgang unter einer Inertgasatmosphäre durchgeführt wird, wobei das Inertgas vorzugsweise Argon ist.

Allerdings kann vorteilhafterweise auch gezielt Kohlenstoff bzw. Stickstoff oder ein Gasgemisch, das Stickstoff enthält, den mechanisch oder chemisch aktivierten Oberflächen des gemahlenen Speichermaterials zugeführt werden oder gemeinsam mit dem Speichermaterial gemahlen werden, um so ein katalysierendes Carbid bzw. Nitrid in situ aus Elementen des Speichermaterials zu bilden.

Die Erfindung wird nun unter Bezugnahme auf verschiedene Diagrammes die das Hydrierungs und Dehydrierungsverhalten sowie andere wichtige Parameter zeigen, im einzelnen beschrieben. Darin zeigen:
- Fig. 1: eine Darstellung des Wasserstoffabsorptions- und -desorptionsverhaltens des erfindungsgemäßen Materials (Katalysator Vanadiumhydrid) zur Darstellung der Lade- und Entladegeschwindigkeit bei Temperaturen zwischen 100°C und 300°C.

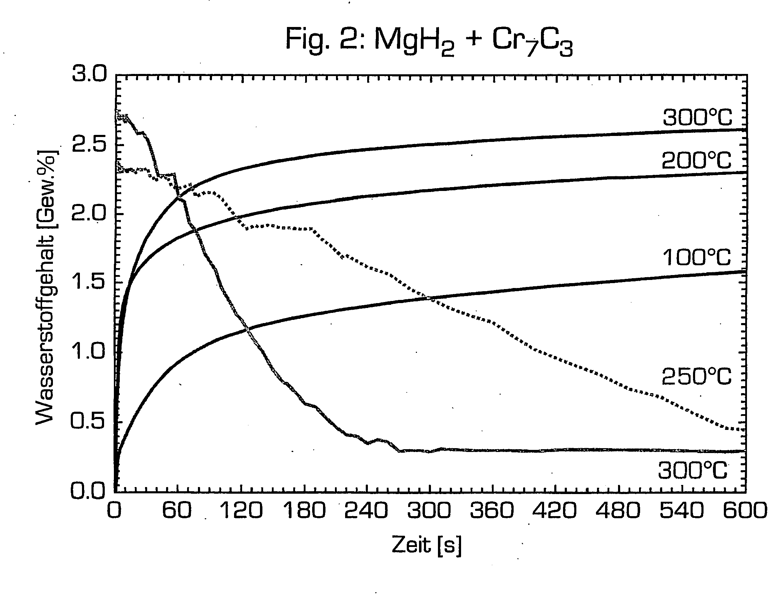

- Fig. 2: eine Darstellung des Wasserstoffabsorptions- und -desorptionsverhaltens des erfindungsgemäßen Materials (Katalysator Chromcarbid) zur Darstellung der Lade- und Entladegeschwindigkeit bei Temperaturen zwischen 100°C und 300°C.
- Fig. 3: eine Darstellung des Wasserstoffabsorptionsverhaltens des erfindungsgemäßen Materials zur Darstellung der Ladegeschwindigkeit bei einer Temperatur von 300°C im Vergleich zu gemahlenem reinem MgH₂ ohne den erfindungsgemäßen Katalysator.
- Fig. 4: eine Darstellung des Wasserstoffdesorptionsverhaltens des erfindungsgemäßen Materials zur Darstellung der Entladegeschwindigkeit bei einer Temperatur von 300°C im Vergleich zu gemahlenem reinem MgH₂ ohne den erfindungsgemäßen Katalysator.
- Fig. 5: eine Darstellung des Wasserstoffdesorptionsverhaltens des erfindungsgemäßen Materials zur Darstellung der Entladegeschwindigkeit bei einer Temperatur von 250°C im Vergleich zu gemahlenem reinem MgH₂ bei 300°C ohne den erfindungsgemäßen Katalysator sowie verschiedenen oxydischen Katalysatoren.
- Fig. 6: eine Darstellung des Wasserstoffabsorptionsverhaltens des erfindungsgemäßen Materials zur Darstellung der Ladegeschwindigkeit bei einer Temperatur von 100°C im Vergleich zu gemahlenem reinem MgH₂ ohne den erfindungsgemäßen Katalysator.

Ein Verfahren zur Herstellung eines erfindungsgemäßen Speichermaterials mit Katalysatorzusatz wird anhand von Beispielen beschrieben. Dabei wird auf die Figuren unmittelbar bezug genommen.

### Beispiel 1:

### MgH₂ + 5 VN

Experimentelle Einzelheiten: 35.4 g von MgH₂ und 4.6 g von VN wurden in einem Molverhältnis von 19:1 in einen 250 ml Mahlbecher aus Stahl gegeben. Hinzugefügt wurden 400 g Stahlkugeln (Kugeldurchmesser 10 mm, Verhältnis Pulver : Kugeln = 1:10). Das Pulver wurde einem mechanischen Hochenergiemahlprozeß in einer Planetenkugelmühle vom Typ Fritsch Pulverisette 5 unterzogen. Der Mahlvorgang wurde unter einer Argonatmosphäre für insgesamt 200 Stunden durchgeführt

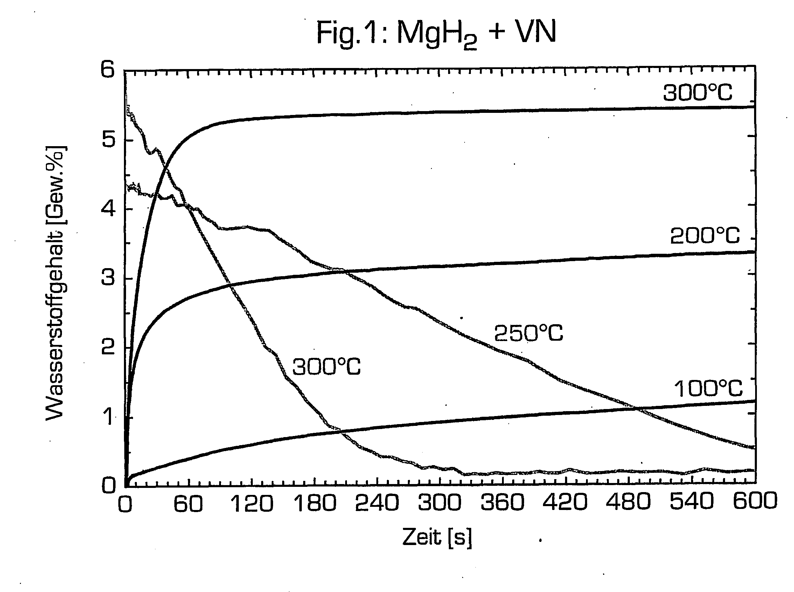

Sorptionsverhalten: Fig. 1 zeigt die Absorption und Desorption des Materials bei Temperaturen zwischen 100°C und 300°C. Bei einem Druck von 150 psi (≈ 1,034 ·10⁶ Pa) wird nach 120 s Ladezeit ein Wasserstoffgehalt von 5.3 bzw. 3.0 bzw. 0.6 Gew.% für Temperaturen von 300°C bzw. 200°C bzw. 100°C erreicht. Die Desorption des Wasserstoffs gegen Vakuum ist bei 300°C bzw. 250°C nach ca. 300 bzw. 600 Sekunden abgeschlossen.

### Beispiel 2:

### MgH₂ + 5 Cr₇C₃

Experimentelle Einzelheiten: 22.2 g MgH₂ und 17.8 g Cr₇C₃ wurden bei einem Molverhältnis von 19:1 auf die gleiche Art und Weise hergestellt, wie es in Beispiel 1 beschrieben ist.

Sorptionsverhalten: Fig. 1 zeigt die Absorption und Desorption des Materials bei Temperaturen zwischen 100°C und 300°C. Bei einem Druck von 150 psi (≈ 1,034 · 10⁶ Pa) wird nach 120 s Ladezeit ein Wasserstoffgehalt von 2.4 bzw. 2.0 bzw. 1.2 Gew.% für Temperaturen von 300°C bzw. 200°C bzw. 100°C erreicht. Die Desorption des Wasserstoffs gegen Vakuum ist bei 300°C bzw. 250°C nach ca. 300 bzw. 600 Sekunden abgeschlossen.

### Reaktionskinetik von Magnesiumhydrid/Vanadiumnitrid und Magnesiumhydrid/Chromcarbid im Vergleich zu reinem Magnesiumhydrid:

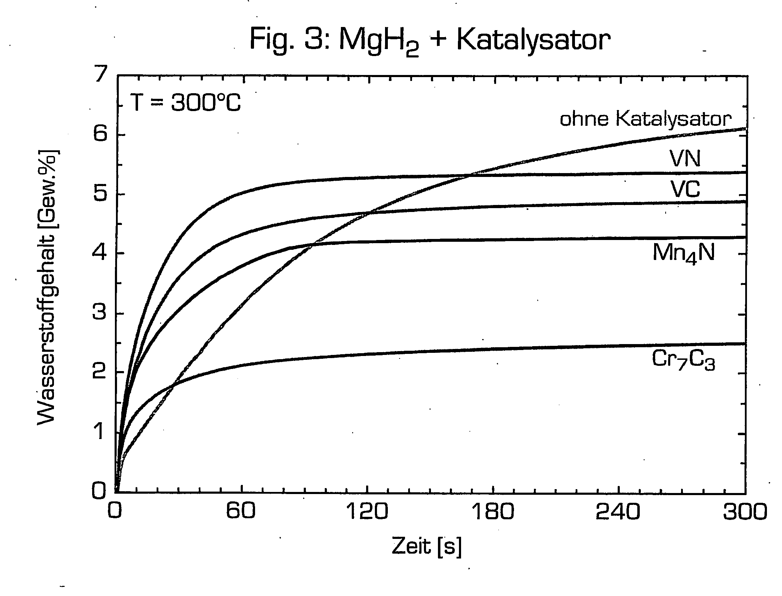

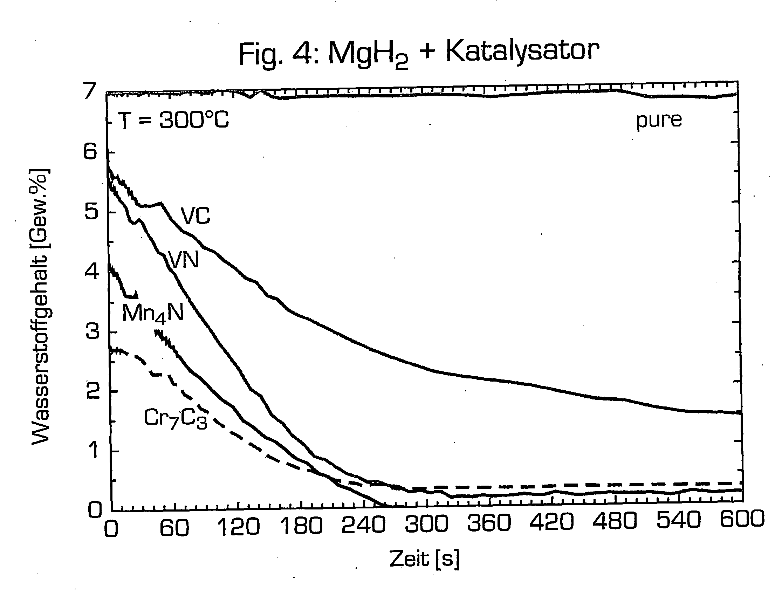

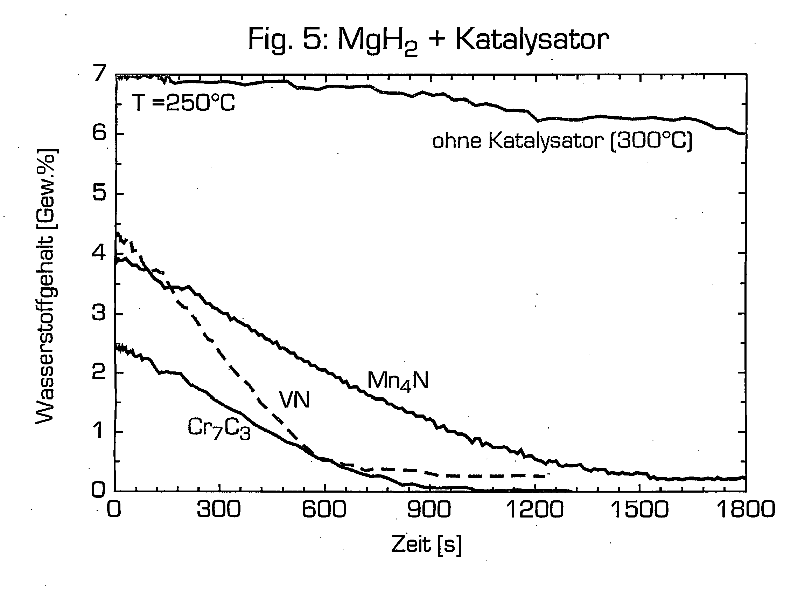

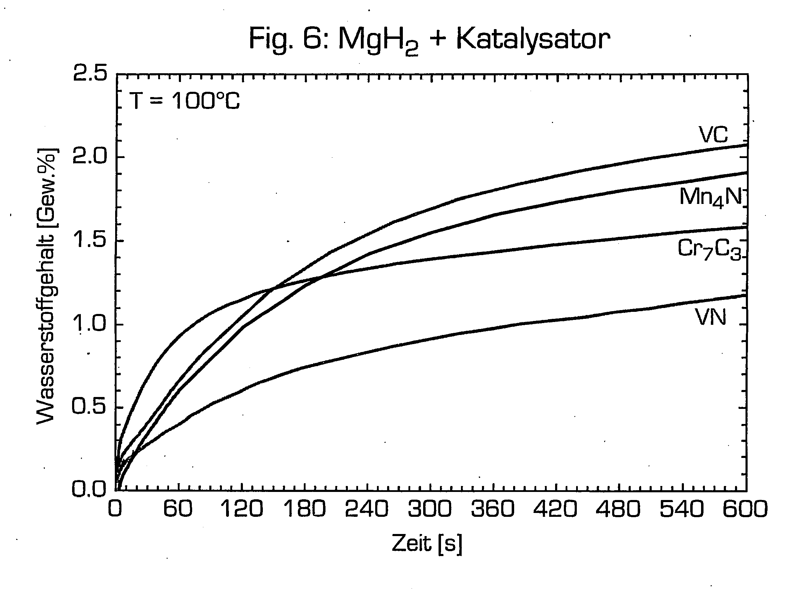

Wie Fig. 3 - 6 belegen, ist eine deutliche Verbesserung der Kinetik sowohl bei der Absorption von Wasserstoff wie auch bei dessen Desorption im Vergleich zu Mg ohne Katalysatorzusatz zu erkennen. Die dem gleichen Mahl prozeß unterzogenen Pulvermischungen besitzen aufgrund der unterschiedlichen Dichte unterschiedliche Gesamtkapazitäten an Wasserstoff. Fig. 3 zeigt die Erhöhung der Absorptionsgeschwindigkeit bei T=300°C. Deutlicher ist der Geschwindigkeitsvorteil bei der Desorption bei gleicher Temperatur (Fig. 4). Das Material läßt sich bei T=250°C durch VN-Zugabe nach ca. 600 s vollständig dehydrieren (Fig. 5), während reines MgH₂ bei T=250°C keine signifikante Wasserstoffabgabe zeigt. Weiterhin ist mit den Katalysatoren die Wasserstoffaufnahme bereits bei 100°C möglich (Fig. 6). Bei dieser Temperatur nimmt Magnesiumhydrid ohne Katalysatorzusatz keinen Wasserstoff auf.

## Patentansprüche

1. Wasserstoffspeichermaterial mit nanokristallinen Strukturen, enthaltend ein Nitrid oder Carbid von Metallen, ausgewählt aus der Gruppe bestehend aus: Sc, Ti, V, Cr, Mn, Fe, Co, Ni, Cu, Zn, Y, Zr, Nb, Mo, Sn, La, Hf, Ta, W oder seltene Erden mit nanokristalliner Struktur.

2. Wasserstoffspeichermaterial nach Anspruch 1, **dadurch gekennzeichnet, dass** es Magnesiumhydrid ist.

3. Verfahren zur Herstellung eines Wasserstoffspeichermaterials gemäß Anspruch 1 oder 2, **dadurch gekennzeichnet, dass** das Wasserstoffspeichermaterial gemeinsam mit dem Nitrid oder Carbid gemahlen wird.

4. Verfahren nach Anspruch 3, **dadurch gekennzeichnet, dass** ein oder mehrere Hydride der Wasserstoffspeichermaterialien gemeinsam mit dem Nitrid oder Carbid gemahlen werden.

5. Verfahren nach Anspruch 4, **dadurch gekennzeichnet, dass** zunächst die Hydride der Wasserstoffspeichermaterialien gemahlen werden und anschließend die Hydride der Wasserstoffspeichermaterialien gemeinsam mit dem Nitrid oder Carbid gemahlen werden.

6. Verwendung von Nitriden oder Carbiden von Metallen ausgewählt aus der Gruppe bestehen aus: Sc, Ti, V, Cr, Mn, Fe, Co, Ni, Cu, Zn, Y, Zr, Nb, Mo, Sn, La, Hf, Ta, W oder seltene Erden als Katalysator zur Hydrierung und Dehydrierung von Wasserstoffspeichermaterialien.

7. Verwendung nach Anspruch 6, **dadurch gekennzeichnet, dass** das Wasserstoffspeichermaterial Magnesiumhydrid ist.

## Claims

1. Hydrogen storage material having nanocrystalline structures, which comprises a nitride or carbide of metals selected from the group consisting of: Sc, Ti, V, Cr, Mn, Fe, Co, Ni, Cu, Zn, Y, Zr, Nb, Mo, Sn, La, Hf, Ta, W or rare earths having a nanocrystalline structure.

2. Hydrogen storage material according to claim 1, **characterized in that** it is magnesium hydride.

3. Process for preparing the hydrogen storage material according to claims 1 or 2, **characterized in that** the hydrogen storage material is milled together with the nitride or carbide.

4. Process according to claim 3, **characterized in that** one or several hydrides of the hydrogen storage material is/are milled together with the nitride or carbide.

5. Process according to claim 4, **characterized in that** first the hydrides of the hydrogen storage materials are milled, and subsequently the hydrides of the hydrogen storage materials are milled together with the nitride or carbide.

6. Use of nitrides or carbides of metals selected from the group consisting of: Sc, Ti, V, Cor, Mn, Fe, Co, Ni, Cu, Zn, Y, Zr, Nb, Mo, Sn, La, Hf, Ta, W or rare earths as catalysts for the hydrogenation and dehydrogenation of hydrogen storage materials.

7. Use according to claim 6 **characterized in that** the hydrogen storage material is magnesium hydride.

## Revendications

1. Matériau de stockage d'hydrogène à structure nanocristalline, comprenant un nitrure ou un carbure métallique, choisi parmi le groupe consistant en : Sc, Ti, V, Cr, Mn, Fe, Co, Ni, Cu, Zn, Y, Zr, Nb, Mo, Sn, La, Hf, Ta, W ou les terres rares à structure nanocristalline.

2. Matériau de stockage d'hydrogène selon la revendication 1, **caractérisé en ce qu'**il s'agit d'hydrure de magnésium.

3. Procédé de fabrication d'un matériau de stockage d'hydrogène conformément à la revendication 1 ou 2, **caractérisé en ce que** le matériau de stockage d'hydrogène est moulu conjointement avec le nitrure ou le carbure.

4. Procédé selon la revendication 3, **caractérisé en ce que** un ou plusieurs hydrures du matériau de stockage d'hydrogène sont moulus conjointement avec le nitrure ou le carbure.

5. Procédé selon la revendication 4, **caractérisé en ce que**, d'abord, les hydrures du matériau de stockage d'hydrogène sont moulus et, ensuite, les hydrures du matériau de stockage d'hydrogène sont moulus avec le nitrure ou le carbure.

6. Utilisation de nitrure ou de carbure métallique choisi parmi le groupe consistant en : Sc, Ti, V, Cr, Mn, Fe, Co, Ni, Cu, Zn, Y, Zr, Nb, Mo, Sn, La, Hf, Ta, W ou les terres rares comme catalyseur pour l'hydrogénation et la déshydrogénation du matériau de stockage d'hydrogène.

7. Utilisation selon la revendication 6, **caractérisée en ce que** le matériau de stockage d'hydrogène est un hydrure de magnésium.
